# FASCICULE DE BREVET EUROPEEN

(11) **EP 0 549 474 B1**
(45) Date de publication et mention de la délivrance du brevet: **25.10.1995**
(21) Numéro de dépôt: 92403546.2
(22) Date de dépôt: 23.12.1992
(51) Int. Cl.: B60H 3/06

(54) **Dispositif de chauffage et/ou de climatisation de l'habitacle d'un véhicule automobile, doté de moyens de filtration d'air**
Heiz- und/oder Klimaanlage für den Innenraum von Kraftfahrzeugen mit Luftfiltermitteln
Heating and/or airconditioning system for the interior of a motor vehicle with air filtration means

(30) Priorité: 23.12.1991 FR 9116022
(43) Date de publication de la demande: 30.06.1993
(73) Titulaire: VALEO THERMIQUE HABITACLE, 78320 Le Mesnil-Saint-Denis (FR)
(72) Inventeur: Dauvergne, Jean, F-95470 Fosses (FR)
(74) Mandataire: Gamonal, Didier

(56) Documents cités:
- DE-A- 3 912 013
- US-A- 5 004 487
- PATENT ABSTRACTS OF JAPAN vol. 9, no. 117 (M-381)(1840) 22 Mai 1985 & JP-A-60 004 412 (MITSUBISHI JUKOGYO K.K.) 10 janvier 1985
- PATENT ABSTRACTS OF JAPAN vol. 12, no. 31 (M-663)(2878) 29 Janvier 1988 & JP-A-62 184 919 (MATSUHIMA KOGYO CO LTD) 13 août 1987

## Description

L'invention concerne un dispositif de chauffage et/ou de climatisation de l'habitacle d'un véhicule automobile doté de moyens de filtration d'air.

On connaît déjà des dispositifs de ce type qui comprennent un pulseur d'air alimenté par une conduite d'admission d'air extérieur et par une conduite d'admission d'air recyclé provenant de l'habitacle, des moyens de réglage du débit d'air au travers des conduites précitées et des moyens de filtration d'air.

Les moyens de réglage de débit sont, le plus souvent, constitués par un ou plusieurs volets pouvant prendre une première position dite "air extérieur", dans laquelle la conduite d'admission d'air recyclé est fermée pour permettre à l'air de passer uniquement par la conduite d'admission d'air extérieur et une seconde position dite "air recyclé", dans laquelle la conduite d'admission d'air extérieur est fermée pour permettre à l'air de passer uniquement par la conduite d'admission d'air recyclé.

Généralement, ces moyens de réglage sont opératoires pour prendre différentes positions intermédiaires permettant de mélanger l'air extérieur et l'air recyclé.

En fonctionnement normal du véhicule, l'utilisateur ajuste les moyens de réglage dans la position "air extérieur" pour admettre dans l'habitacle uniquement de l'air provenant de l'extérieur du véhicule. Ce n'est que dans des circonstances exceptionnelles, c'est-à-dire lorsque le véhicule traverse une zone où l'air est particulièrement vicié, qu'il place les moyens de réglage en position "air recyclé" pour interdire à l'air extérieur de pénétrer dans l'habitacle.

On connaît déjà, d'après le document EP-A-380453, un dispositif de ce type qui comprend un filtre unique placé au confluent de la conduite d'admission d'air extérieur et de la conduite d'admission d'air recyclé et conçu pour assurer uniquement la filtration de l'air extérieur. Il s'agit là, en fait, d'un filtre dit "filtre à particules", destiné à retenir les différentes particules en suspension dans l'air extérieur, l'air de recyclage n'étant pas soumis à une telle filtration.

Par ailleurs, on connaît des dispositifs qui, dans leur structure générale, s'apparentent à celui du document précité et qui comprennent aussi un filtre unique placé au confluent des deux conduites d'admission d'air, et cela pour assurer aussi bien la filtration de l'air extérieur que celle de l'air recyclé. Ce filtre unique est un "filtre à odeurs" contenant une matière absorbante, du type charbon actif, pour absorber ou pièger les odeurs véhiculées par l'air qui traverse le filtre.

Etant donné que ce filtre assure indifféremment la filtration de l'air extérieur et la filtration de l'air recyclé, il fonctionne en permanence et a tendance à s'encrasser et se saturer très rapidement. Comme ce filtre fonctionne essentiellement dans la position "air extérieur", lorsque l'utilisateur passe en position "air recyclé", on constate que le filtre n'est plus efficace pour traiter l'air recyclé provenant de l'habitacle.

Ces dispositifs de filtration connus ont pour inconvénient d'être coûteux, mais surtout de ne pouvoir traiter efficacement et en permanence la totalité du débit d'air traversant l'installation de chauffage et/ou de climatisation.

L'invention a notamment pour but de rémédier à ces inconvénients.

Elle propose, en conséquence, un dispositif de chauffage et/ou de climatisation du type défini en introduction, dans lequel le pulseur comprend un boîtier muni d'une entrée d'air et d'une sortie d'air et logeant intérieurement une turbine de ventilateur entraînée par un moteur électrique et en ce que le boîtier est disposé à l'intérieur de l'enceinte, de telle sorte que le moteur de la turbine soit accessible par l'entrée d'air recyclé lorsque le filtre à odeurs est enlevé

Ainsi, lorsque l'utilisateur détecte une gêne olfactive, il peut facilement s'isoler de celle-ci, lorsqu'elle est, comme dans la plupart des cas, extérieure à l'habitacle. Il lui suffit alors de régler le dispositif dans la position "air recyclé", dans laquelle le dispositif peut traiter la pollution introduite dans l'habitacle et cela, grâce au filtre implanté sur la conduite d'admission d'air recyclé.

Il en résulte que ce filtre n'est sollicité que dans la position "air recyclé", c'est-à-dire dans des conditions relativement exceptionnelles.

Comme ce filtre est peu utilisé, il s'encrasse et se sature très lentement et demeure efficace très longtemps.
On peut de plus remplacer facilement le filtre à odeurs lorsqu'il est saturé et en outre on facilite l'entretien du pulseur.

Ce dernier est avantageusement réalisé sous la forme d'une cartouche remplaçable, contenant une matière absorbante du type charbon actif, propre à s'adapter dans l'entrée d'air recyclé de l'enceinte.

De préférence, l'enceinte comporte un passage d'air qui communique d'une part avec l'entrée d'air recyclé de l'enceinte et, d'autre part, avec l'entrée d'air du boîtier, le dispositif comprenant en outre un volet de commande d'air recyclé contrôlant le passage d'air précité et un volet de commande d'air extérieur contrôlant l'entrée d'air extérieur de l'enceinte.

On réalise ainsi un dispositif particulièrement compact qui intègre le pulseur et qui peut être facilement démonté à des fins de réparation ou d'entretien.

L'entrée d'air recyclé comprend avantageusement une butée intérieure munie d'un joint d'étanchéité ainsi que des moyens de maintien de la cartouche, ces derniers comprenant par exemple au moins un crochet de clipsage.

Selon une autre caractéristique de l'invention, le dispositif comprend en outre un filtre à particules et un filtre à odeurs disposés dans la conduite d'admission d'air extérieur.

Comme ce dernier filtre à odeurs est distinct du filtre à odeurs logé dans la conduite d'admission d'air recyclé, même s'il est saturé, il n'entrave pas le bon fonctionnement du filtre à odeurs assurant la filtration de l'air recyclé.

Selon une autre caractéristique de l'invention, le dispositif comprend en outre un capteur propre à agir sur les moyens de réglage d'air par l'intermédiaire d'une motorisation appropriée.

Dans la description qui suit, faite seulement à titre d'exemple, on se réfère aux dessins annexés, sur lesquels :
- la figure 1 est une représentation schématique d'une installation de chauffage et/ou de climatisation munie de moyens de filtration d'air, conformément à l'invention ;
- la figure 2 est une vue en coupe longitudinale d'une enceinte destinée à faire partie d'un dispositif selon l'invention et logeant un pulseur d'air ;
- la figure 3 est une représentation, à échelle agrandie, du détail III de la figure 2 ; et
- la figure 4 est une représentation, à l'échelle agrandie, du détail IV de la figure 2.

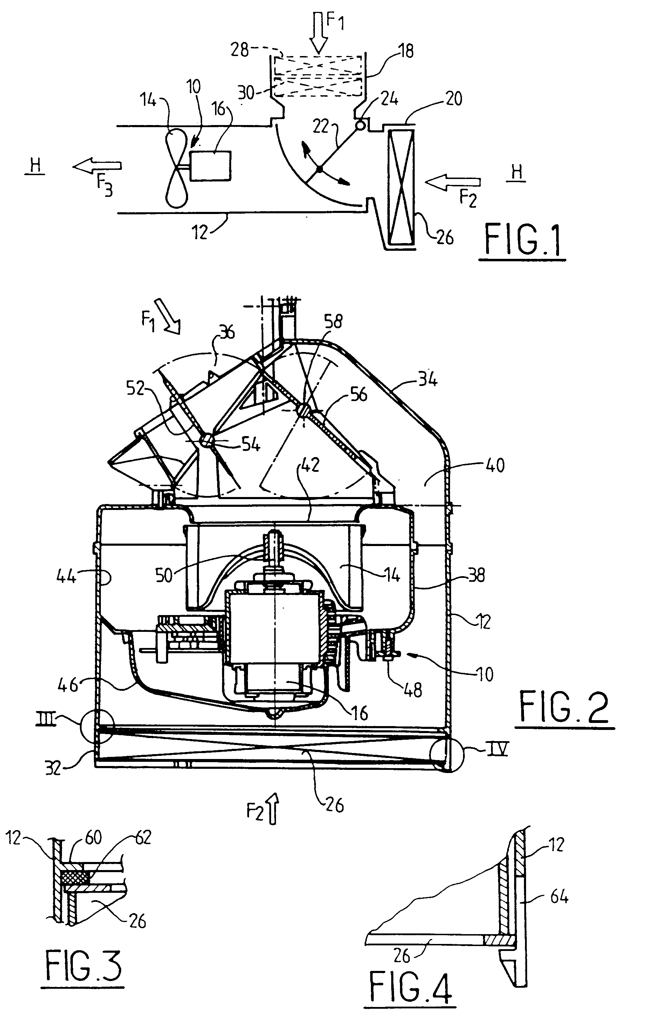

On se réfère tout d'abord à la figure 1 qui représente un dispositif de chauffage et/ou de climatisation de l'habitacle d'un véhicule automobile. Ce dispositif comprend un pulseur d'air 10 logé dans une enceinte 12 et comportant une turbine de ventilateur 14 entraînée par un moteur électrique 16.

Le pulseur d'air 10 est alimenté par une conduite 18 d'admission d'air extérieur, prélevé à l'extérieur de l'habitacle H du véhicule et par une conduite 20 d'admission d'air recyclé provenant de l'habitacle H. Les conduites 18 et 20 sont propres à alimenter le pulseur 10, respectivement par de l'air extérieur, comme indiqué par la flèche F₁, et de l'air recyclé, comme indiqué par la flèche F₂.

Le dispositif comprend en outre un volet de réglage 22 monté pivotant autour d'un axe 24 et propre à évoluer dans la zone de jonction des conduites 18 et 20, immédiatement en amont du pulseur d'air 10. Le volet 22 est propre à obturer sélectivement l'une ou l'autre des deux conduites 18 et 20 pour prendre deux positions extrêmes : une première position dans laquelle la conduite 20 est obturée pour permettre uniquement l'admission d'air extérieur par la conduite 18 et une autre position dans laquelle la conduite 18 est obturée pour permettre l'admission uniquement d'air recyclé par la conduite 20. Il peut aussi prendre une multiplicité de positions intermédiaires entre les deux positions extrêmes précitées.

Le pulseur d'air ainsi alimenté par l'une et/ou l'autre des conduites 18 et 20 génère un flux d'air qui est envoyé dans l'habitacle H du véhicule comme représenté par la flèche F₃. Conformément à l'invention, la conduite 20 d'admission d'air recyclé est munie d'un filtre 26, dit "filtre à odeurs", constitué d'une cartouche remplaçable contenant une matière absorbante, du type charbon actif.

Lorsque le dispositif est réglé dans la position "air extérieur", ce qui correspond à la majorité des cas d'utilisation, le volet 22 ferme la conduite 20 et le pulseur envoie dans l'habitacle H uniquement de l'air extérieur. Si l'utilisateur détecte olfactivement une mauvaise odeur, laquelle provient généralement de l'extérieur, il place le dispositif dans la position "air recyclé", dans laquelle le volet 22 obture la conduite 18. En ce cas, le pulseur 10 envoie dans l'habitacle uniquement de l'air recyclé prélevé de cet habitacle. Le filtre agit alors efficacement pour piéger les odeurs contenues éventuellement dans l'habitacle.

Dans une forme de réalisation plus élaborée de l'invention, la conduite 18 d'admission d'air extérieur est dotée d'un filtre à particules 28 et d'un filtre à odeurs 30 (tous deux représentés en trait interrompu sur la figure 1). Ainsi, la filtration du flux d'air extérieur, notamment par le filtre à odeurs 30, est assurée par des moyens indépendants du filtre à odeurs 26.

Celui-ci ne risque donc pas d'être saturé rapidement, comme c'était le cas avec les dispositifs de la technique antérieure comportant un filtre unique, propre à assurer à la fois la filtration de l'air extérieur et celle de l'air recyclé.

Dans la forme de réalisation représentée à la figure 2, le dispositif comprend une enceinte 12 réalisée sous la forme d'une jupe cylindrique dans laquelle est logé le pulseur 10. L'enceinte 12 comprend, à l'une de ses extrémités, une entrée d'air recyclé 32, propre à recevoir un filtre à odeurs 26, tel que décrit précédemment. L'enceinte 12 comporte, à son autre extrémité, un prolongement 34 muni d'une entrée 36 d'air extérieur. L'enceinte 12 peut ainsi recevoir de l'air extérieur comme représenté par la flèche F₁ ou de l'air recyclé comme représenté par la flèche F₂.

Le pulseur 10 comprend un boîtier 38 en forme de volute qui est logé à l'intérieur de l'enceinte et qui ménage avec cette dernière un passage de communication 40. Le boîtier 38 possède une entrée d'air 42 et une sortie d'air 44 (débouchant perpendiculairement au plan du dessin). Le boîtier 38 est muni d'un fond démontable 46 tourné du côté de l'entrée 32 de l'enceinte 12 et fixé par des vis 48.

A l'intérieur du boîtier 38, est disposée une turbine de ventilateur 14 entraînée en rotation par un moteur électrique 16 autour d'un axe 50.

Lorsque le filtre 26 est enlevé, on peut accéder facilement au moteur 16 après avoir enlevé le fond 46, pour procéder à des opérations d'entretien ou de réparation.

Le dispositif comprend en outre un volet de réglage 52 monté à pivotement autour d'un axe 54 et propre à contrôler le débit d'air extérieur pénétrant à travers l'entrée d'air 36 de l'enceinte et, de là, dans l'entrée 42 du boîtier 38.

Le dispositif comprend en outre un second volet 56 monté à pivotement autour d'un axe 58 et propre à contrôler le débit d'air pénétrant par l'entrée 32 de l'enceinte 12 et traversant le passage 40 précité, pour gagner ensuite l'entrée 42 du pulseur.

Ainsi, en réglant la position des volets 52 et 56, on peut faire pénétrer dans l'entrée 42 du pulseur, soit de l'air extérieur, soit de l'air recyclé, soit un mélange des deux.

Comme montré à la figure 3, l'entrée 32 de l'enceinte 12 comprend une butée intérieure périphérique 60 munie d'un joint d'étanchéité 62 destiné à coopérer avec le filtre à odeurs 26 lorsque ce dernier est mis en place dans l'entrée 32.

Cette dernière est munie par ailleurs d'au moins un crochet de clipsage 64 (figure 4) propre à assurer le maintien en position du filtre 26.

Comme indiqué, le filtre 26 est avantageusement réalisé sous la forme d'une cartouche remplaçable qui peut être aisément mise en place et remplacée lorsque sa matière absorbante est saturée. Lorsque la cartouche est enlevée, il est possible d'accéder facilement au moteur du pulseur à des fins d'entretien ou de réparation.

Dans une variante de réalisation de l'invention (non représentée), il est possible de prévoir en outre un capteur pour agir de façon automatique sur une motorisation du ou des volets d'entrée d'air du dispositif.

## Revendications

1. Dispositif de chauffage et/ou de climatisation de l'habitacle d'un véhicule automobile, comprenant un pulseur d'air (10) alimenté par une conduit (18) d'admission d'air extérieur et une conduite (20) d'admission d'air recyclé provenant de l'habitacle , une enceinte (12) logeant le pulseur d'air (10) et munie d'une entrée d'air extérieur (36) et d'une entrée d'air recyclé (32) des moyens de réglage (22,54,56) du débit au travers des deux conduites d'admission précitées (18,20) et des moyens de filtration d'air comprennent un filtre à odeurs (26) placé dans la conduite d'admission d'air recyclé (20) et monté de façon amovible sur l'entrée d'air recyclé (32), caractérisé en ce que le pulseur (10) comprend un boîtier (38) muni d'une entrée d'air (42) et d'une sortie d'air (46) et logeant intérieurement une turbine de ventilateur (14) entraînée par un moteur électrique (16) et en ce que le boîtier (38) est disposé à l'intérieur de l'enceinte (12), de telle sorte que le moteur de la turbine soit accessible par l'entrée d'air recyclé (32) lorsque le filtre à odeurs (26) est enlevé.

2. Dispositif selon la revendication 1, caractérisé en ce que l'enceinte (12) comporte un passage d'air (40) communiquant d'une part avec l'entrée d'air recyclé (32) de l'enceinte (12) et d'autre part avec l'entrée d'air (42) du boîtier (38) et en ce qu'il est prévu un volet de commande d'air recyclé (56) contrôlant le passage d'air (40) et un volet de commande d'air extérieur (52) contrôlant l'entrée d'air extérieur (36).

3. Dispositif selon la revendication 2, caractérisé en ce que le filtre à odeurs (26) est réalisé sous la forme d'une cartouche remplaçable contenant une matière absorbante du type charbon actif, propre à s'adapter dans l'entrée d'air recyclé (32).

4. Dispositif selon la revendication 3, caractérisé en ce que l'entrée d'air recyclé (32) de l'enceinte (12) comprend une butée intérieure périphérique (60) munie d'un joint d'étanchéité (62) et des moyens de maintien (64) de la cartouche.

5. Dispositif selon la revendication 4, caractérisé en ce que les moyens de maintien sont constitués par au moins un crochet de clipsage (64).

6. Dispositif selon l'une des revendications 1 à 5, caractérisé en ce qu'il comprend en outre un filtre à particules (28) et un filtre à odeurs (30) disposés dans la conduite (18) d'admission d'air extérieur.

## Claims

1. Apparatus for the heating and/or air conditioning of the cabin of a motor vehicle, comprising an air blower (10) which is fed through a fresh air admission duct (18) and a duct (20) for admission of air recycled from the cabin, a chamber (12) containing the air blower (10) and having a fresh air inlet (36) and a recycled air inlet (32), means (22, 54, 56) for regulating the flow through the two said admission ducts (18, 20), and air filter means comprising a deodorising filter (26) placed in the recycled air admission duct (20) and mounted removably on the recycled air inlet (32), characterised in that the blower (10) comprises a casing (38) having an air inlet (42) and an air outlet (46), and containing within it a blower rotor (14) which is driven by an electric motor (16), and in that the casing (38) is disposed inside the chamber (12) in such a way that the motor of the blower rotor is accessible through the recycled air inlet (32) when the deodorising filter (26) is removed.

2. Apparatus according to Claim 1, characterised in that the chamber (12) includes an air passage (40) which communicates, firstly with the recycled air inlet (32) of the chamber (12) and secondly with the air inlet (42) of the casing (38), and in that a recycled air control valve (56) for controlling the air passage (40), and a fresh air control valve (52) for controlling the fresh air inlet (36), are provided.

3. Apparatus according to Claim 2, characterised in that the deodorising filter (26) is made in the form of a replaceable cartridge containing an absorbent material of the active carbon type, being adapted to fit in the recycled air inlet (32).

4. Apparatus according to Claim 3, characterised in that the recycled air inlet (32) of the chamber (12) includes a peripheral internal engagement surface (60) having a sealing ring (62) and means (64) for retaining the cartridge.

5. Apparatus according to Claim 4, characterised in that the retaining means consist of a snap-fitting hook (64).

6. Apparatus according to one of Claims 1 to 5, characterised in that it further comprises a particle filter (28) and a deodorising filter (30) disposed in the fresh air admission duct (18).

## Patentansprüche

1. Heiz- und/oder Klimaanlage für Innenräume von Kraftfahrzeugen mit einem Luftpulsator (10), der von einem Kanal (18) für die Zufuhr von Außenluft und einem Kanal (20) für die Zufuhr umgewälzter Luft, die aus dem Innenraum stammt, gespeist wird, mit einer Kammer (12), in der der Pulsator untergebracht ist und die mit einem Einlaß für Außenluft (36) sowie mit einem Einlaß für umgewälzte Luft (32) versehen ist, mit Mitteln (22, 54, 56) zur Steuerung der Durchflußmenge durch die beiden Zufuhrkanäle (18, 20) sowie mit Mitteln zum Filtrieren der Luft, die einen Geruchsfilter (26) umfassen, der in dem Kanal für die umgewälzte Luft (20) untergebracht ist und herausnehmbar auf dem Einlaß für die umgewälzte Luft (32) montiert ist, **dadurch gekennzeichnet**, daß der Pulsator (10) ein Gehäuse (38) umfaßt, das mit einem Lufteinlaß (42) und einem Luftauslaß (46) versehen ist und innen ein Gebläse (14) aufnimmt, das von einem Elektromotor (16) angetrieben wird, und daß das Gehäuse (38) im Inneren der Kammer (12) so untergebracht ist, daß der Gebläsemotor über den Einlaß für die umgewälzte Luft (32) zugänglich ist, wenn der Geruchsfilter (26) herausgenommen wird.

2. Vorrichtung nach Anspruch 1, **dadurch gekennzeichnet**, daß die Kammer (12) einen Luftdurchgang (40) umfaßt, der einerseits mit dem Einlaß für umgewälzte Luft (32) der Kammer (12) und andererseits mit dem Lufteinlaß (42) des Gehäuses (38) kommuniziert, daß eine Steuerklappe für umgewälzte Luft (56), die den Luftdurchgang (40) steuert sowie eine Steuerklappe für die Außenluft (52), die den Einlaß für die Außenluft (36) steuert, vorgesehen ist.

3. Vorrichtung nach Anspruch 2, **dadurch gekennzeichnet**, daß der Geruchsfilter (26) als ersetzbare Kartusche gefertigt ist, die ein absorbierendes Material des Typs Aktivkohle enthält und die dazu geeignet ist, sich in den Einlaß für die umgewälzte Luft (32) einzupassen.

4. Vorrichtung nach Anspruch 3, **dadurch gekennzeichnet**, daß der Einlaß für die umgewälzte Luft (32) der Einfassung (12) eine innen liegende Anschlagkante (60) umfaßt, die mit einem Dichtmittel (62) und Haltemitteln (64) für die Kartusche versehen ist.

5. Vorrichtung nach Anspruch 4, **dadurch gekennzeichnet**, daß die Haltemittel wenigstens einen Verriegelungshaken (64) umfassen.

6. Vorrichtung nach einem der Ansprüche 1 bis 5, **dadurch gekennzeichnet**, daß sie außerdem einen Teilchenfilter (28) und einen Geruchsfilter (30) umfaßt, die in dem Kanal (18) für die Zufuhr der Außenluft angebracht sind.
